(19) Europäisches Patentamt / European Patent Office / Office européen des brevets

(11) **EP 4 459 309 A1**

(12) **EUROPEAN PATENT APPLICATION**

(43) Date of publication:
**06.11.2024 Bulletin 2024/45**

(21) Application number: **23206242.2**

(22) Date of filing: **26.10.2023**

(51) International Patent Classification (IPC):
**G01S 5/02** (2010.01)

(52) Cooperative Patent Classification (CPC):
**G01S 5/02528; G01S 5/02524**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.05.2023 KR 20230056839**

(71) Applicant: **Ewha University-Industry Collaboration Foundation Seoul 03760 (KR)**

(72) Inventors:
• **KANG, Dayeon**
  **12073 Gyeonggi-do (KR)**
• **KIM, Jeewoon**
  **03766 Seoul (KR)**
• **LEE, Hyungjune**
  **06276 Seoul (KR)**
• **YOON, Jinyi**
  **21539 Incheon (KR)**
• **YOU, Yeawon**
  **14017 Gyeonggi-do (KR)**

(74) Representative: **Ostertag & Partner Patentanwälte mbB**
  **Azenbergstraße 35**
  **70174 Stuttgart (DE)**

(54) **METHOD, DATA PROCESSING APPARATUS, AND POSITIONING APPARATUS FOR GENERATING FINGERPRINT MAP FOR UNEXPLORED AREA**

(57) A method, a data processing apparatus, and a positioning apparatus for generating a fingerprint map for an unexplored area are proposed. The method includes receiving, by a data processing apparatus, locations of reference points and locations of a plurality of access points (APs) for a service area, extracting, by the data processing apparatus, feature vectors for each AP on a basis of the locations of the reference points and the locations of the APs, generating, by the data processing apparatus, a fingerprint map for each of the APs by inputting, as conditions, the feature vectors extracted for each corresponding AP into a previously trained generative model for each of the APs and inputting random noise, and generating, by the data processing apparatus, a final fingerprint map for the service area by combining the fingerprint maps generated for the APs.

FIG. 4

**Description**

CROSS REFERENCE TO RELATED APPLICATION

This application claims the benefit under 35 U.S.C. § 119(a) of Korean Patent Application No. 10-2023-0056839, filed on May 2, 2023, in the Korean Intellectual Property Office, the entire disclosure of which is incorporated herein by reference for all purposes.

BACKGROUND

1. Field

The following description relates to a technique for automatically generating a fingerprint map.

This application is supported by the National Research Foundation of Korea (No. NRF-2021R1A2B5B01002906) and the Institute for Information & Communication Technology Planning & Evaluation (No. RS-2022-00155966, Artificial Intelligence Convergence Innovation Talent Training, Ewha Womans University)

2.Description of the Related Art

Indoor positioning refers to positioning in areas such as indoors where it is difficult to receive signals from a satellite navigation system. The indoor positioning typically applies a method of using wireless signals such as Wi-Fi or Bluetooth. Furthermore, the indoor positioning based on wireless signals typically uses a fingerprint technique.

Fingerprint-based indoor positioning is required to create a fingerprint map by collecting wireless signals in a service area in advance. The fingerprint-based indoor positioning has demerits of taking significant time and money in the creating of the fingerprint map.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided a method for generating a fingerprint map for an unexplored area includes: receiving, by a data processing apparatus, locations of reference points and locations of a plurality of access points (APs) for a service area; extracting, by the data processing apparatus, feature vectors for each AP on a basis of the locations of the reference points and the locations of the APs; generating, by the data processing apparatus, a fingerprint map for each of the APs by inputting, as conditions, the feature vectors extracted for each corresponding AP into a previously trained generative model for each of the APs and inputting random noise; and generating, by the data processing apparatus, a final fingerprint map for the service area by combining the fingerprint maps generated for the APs.

In another aspect, there is provided a data processing apparatus for generating a fingerprint map for an unexplored area includes: an input device for receiving an input of locations of reference points and a location of each access point (AP) for a service area; a storage device for storing a generative model trained to receive, as conditions, an input of feature vectors extracted on a basis of fingerprint maps of a specific area and each AP of the reference points of the specific area and generate the fingerprint maps for the specific area; and a calculation device for extracting distances from the respective reference points for the service area to each AP and angles formed between the respective reference points and each AP to input the distances and angles as the conditions for the generative model, and inputting random noise into the generative model to generate the fingerprint maps for the service area.

In still another aspect, there is provided a positioning apparatus using virtual fingerprint maps includes: a communication device for receiving wireless signals from access points (APs) at a current location; a storage device for storing the virtual fingerprint maps; and a calculation device for estimating the current location on a basis of wireless signal strength of each AP with reference to the virtual fingerprint maps.

BRIEF DESCRIPTION OF THE DRAWINGS

FIGS. 1A to 1C illustrates an example of a fingerprint-based positioning system.
FIG. 2 illustrates an example of a schematic process of creating a generative model.
FIG. 3 illustrates an example of a specific learning process of the generative model.

FIG. 4 illustrates an example of a process of generating, by a data processing apparatus, a fingerprint map by using the generative model.

FIG. 5 illustrates an example of the data processing apparatus for generating a fingerprint map for an unexplored area.

FIG. 6 illustrates an example of a positioning apparatus using virtual fingerprint maps.

Throughout the drawings and the detailed description, the same reference numerals refer to the same elements. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

As used herein, the term "and/or" includes any one and any combination of any two or more of the associated listed items.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

The technology described below is a technique that generates a fingerprint map for positioning in a service area.

The service area refers to an area where it is difficult to receive satellite navigation signals. Therefore, hereinafter, the service area is used to include an indoor area.

The technology described below generates a fingerprint map by using a generative model.

Various types of generative models are being studied. For example, the generative models include autoencoders, generative adversarial networks (GANs), diffusion models, etc. As will be described below, the present researcher used a GAN-based model. Accordingly, the following description focuses on the GAN model. However, any one of various types of generative models may be used as a model for generating a fingerprint map.

Hereinafter, it will be described that a learning device creates a generative model by using training data. The learning device is a device capable of performing data processing and model learning. The learning device may also create the training data. For example, the learning device may be implemented as a PC, a server on a network, a smart device, a chipset with embedded dedicated programs, or the like.

Hereinafter, it will be described that the data processing apparatus generates a fingerprint map by using a generative model. For example, the data processing apparatus may be implemented as a PC, a server on a network, a smart device, a chipset with embedded dedicated programs, or the like.

In the following description, a wireless signal may be any one of various types of signals such as Wi-Fi and Bluetooth. A terminal receives the wireless signal in a service area. The terminal may be any one of various types of devices such as smart devices, mobile devices, wearable devices, and robots.

Hereinafter, it will be described that a positioning apparatus performs positioning in a service area by using a generated fingerprint map. The positioning apparatus may be a device such as a terminal or a server.

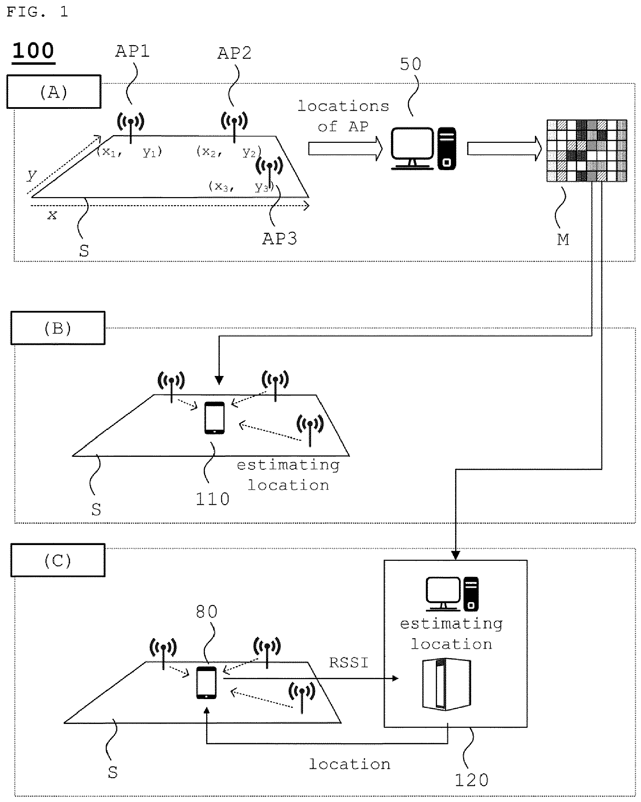

FIGS. 1A to 1C illustrates an example of a fingerprint-based positioning system 100.

Although a service area S is a real three-dimensional space, a fingerprint map generally is composed of information in a two-dimensional plane. In the service area S, relevant areas (including locations of reference points) and locations of access points (APs) may be defined on the basis of a predetermined coordinate system. Each AP is a device for transmitting wireless signals such as Wi-Fi in the service area.

FIG. 1A shows a process of generating a fingerprint map by a data processing apparatus 50. The data processing apparatus 50 extracts predetermined vector information from AP location information. By inputting random noise and vector information into a generative model created in advance, The data processing apparatus 50 generates the fingerprint map M for the service area S. The fingerprint map is generally in the form of a grid map and retains wireless signal strength information for each rectangular section. The process of creating the generative model and the process of generating the specific fingerprint map are described below.

FIGS. 1B and 1C show a process where each positioning apparatus performs positioning in the service area by using the fingerprint map.

A positioning apparatus 110 such as a smart device may estimate its own current location on the basis of strength of wireless signals received from APs at the current location in a service area S with reference to the fingerprint map.

A terminal 80 collects the strength of wireless signals received from the APs at the current location in the service area S. The terminal 80 transmits wireless signal strength information to a separate positioning apparatus 120. The positioning apparatus 120 such as a computer device or a server may estimate a current location of the terminal 80 on the basis of the strength of wireless signals received from the APs at the current location in the service area S with reference to the fingerprint map. The positioning apparatus 120 may transmit a positioning result to the terminal 80.

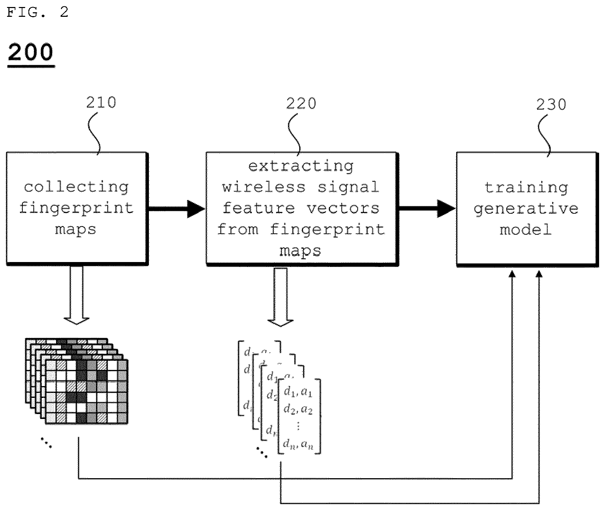

FIG. 2 illustrates an example of a schematic process 200 of creating a generative model. It will be described that the learning device creates the generative model. The learning device corresponds to a computer device for controlling processes of fingerprint data processing and generative model learning.

In step 210, a learning device collects fingerprint maps generated in advance. The fingerprint maps used in a model creation process are called fingerprint maps for training. The fingerprint maps for training may be generated on the basis of the strength of wireless signals manually collected in a specific area according to a conventional method. The fingerprint maps for training may also be extracted from a public database (DB).

In step 220, the learning device extracts each wireless signal feature vector from the fingerprint maps for training. The wireless signal feature vectors are used as additional information (i.e., conditions) in the generative model learning process.

A process of extracting wireless signal feature vectors by a learning device is described. The learning device extracts the wireless signal feature vectors for each AP from fingerprint maps for training.

The fingerprint maps for training store strength of wireless signals received at each reference point (or each data point) of a service area. Each fingerprint map for training is generally in the form of a grid map and retains wireless signal strength information for each rectangular section. Equation 1 below represents a fingerprint $X(i)$ at an $i$-th reference point of the service area.

[Equation 1]

$$X(i) = \{s_1, s_2, \cdots, s_{N_{ap}}\} \text{ for } i \in \{1, 2, \cdots, N_{data}\}$$

$X(i)$ is a fingerprint at an $i$-th reference point. $s_j$ is strength of a wireless signal received from a $j$-th AP (where, $j$ is an index of AP) at the $i$-th reference point. $N_{ap}$ is the number of APs located in the service area. $N_{data}$ is the number of reference points in the service area.

The learning device may extract wireless signal feature vectors for each AP. The learning device may define the feature vectors for each AP in a fingerprint map as shown in Equation 2 below. $X_j(i)$ refers to strength of a wireless signal received from AP $j$ at the $i$-th reference point.

[Equation 2]

$$X_j(i) = s_j \text{ for } j \in \{1, 2, \cdots, N_{ap}\}$$

Based on reference points in a service area, the present researcher extracted, as feature values: (i) distances to an AP; and (ii) angles with respect to the AP. That is, a wireless signal feature vector may be defined as (a distance value, an angle) for each reference point. The learning device may extract each wireless signal feature vector on the basis of a previously known location of an AP in the service area based on a specific coordinate system. The present researcher used, as a feature value, an azimuth (i.e., an angle in a plane) between a reference point and the AP.

Alternatively, the learning device may use a widely known wireless signal propagation model such as a logdistance path loss model to estimate a distance between a specific point and an AP on the basis of wireless signal strength at the specific point.

The learning device may extract wireless signal feature vectors expressed in Equation 3 below from a fingerprint map. In other words, the learning device may generate a new fingerprint map (i.e., a feature vector map) expressed in

Equation 3 below. $X_j$ represents wireless signal feature vectors for AP j.

[Equation 3]

$$X_j(d_i, a_i) = s_j \text{ for } j \in \{1, 2, \cdots, N_{ap}\}$$

$d_i$ is a distance from an i-th reference point to AP j, and $a_i$ is an angle between the i-th reference point and AP j.

In step 230, the learning device uses the fingerprint maps for training and the wireless signal feature vectors to train a generative model.

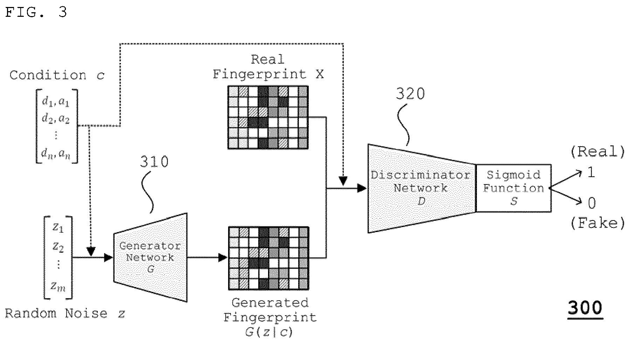

FIG. 3 illustrates an example of a specific learning process of a generative model.

The present researcher used a conditional GAN model (cGAN). cGAN 300 consists of a generator network G 310 and a discriminator network D 320, which are adversarial to each other.

The generator network G 310 learns distribution of a real fingerprint map $X_{real}$ to generate a virtual (i.e., fake) fingerprint map $X_{fake}$ = G(z|c) from random noise z. In this case, the generator network G 310 receives the above-described wireless signal feature vectors as conditions. The wireless signal feature vectors include distances and angles from reference points to an AP. FIG. 3 shows Condition c, which includes wireless signal feature vectors for n reference points.

The discriminator network D 320 receives the fingerprint map G(z c) generated by the generator network G 310 and the real fingerprint map and determines whether G(z|c) is real or fake. In this case, the discriminator network D 320 also receives the conditions that are the wireless signal feature vectors.

As the distribution of the generated fingerprint map G(z|c) becomes similar to the distribution of the real fingerprint map, a discriminant value D(G(z|c)) output by the discriminator network D 320 gets closer to 1. An objective function of cGAN 300 can be defined as Equation 4 below.

[Equation 4]

$$\min_G \max_D V(D, G) = \mathbb{E}_{x \sim P_{data}(x_{real})} \left[ logD(x|c) \right]$$
$$+ \mathbb{E}_{z \sim p_z(z)} \left[ log(1 - D(G(z|c))) \right]$$

$P_{data}(X_{real})$ is the distribution of the real fingerprint map, and $z \sim P_z(z)$ refers to the distribution of the generated fingerprint map.

To prevent overfitting of the generator network G 310, the present researcher used an auxiliary classifier GAN (AC-GAN). AC-GAN includes a class classifier (for class loss) for predicting conditions (i.e., distances and angles) in addition to a discriminator (for sample loss) for classifying whether the generated fingerprint map G(z c) is real data or not. cGAN 300 is trained in the discriminator network D 320 in a direction of maximally reducing both sample loss and class loss. Using AC-GAN may be an optional configuration for fingerprint map generation.

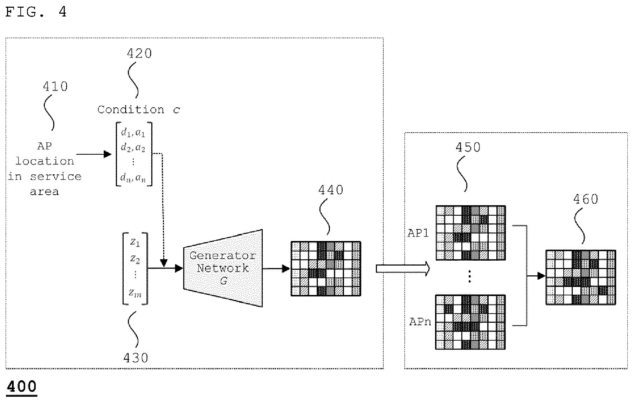

FIG. 4 illustrates an example of a process 400 in which a data processing apparatus generates fingerprint maps by using a generative model. FIG. 4 shows an example of fingerprint map generation for an unexplored service area in which wireless signal information has not been explored.

In step 410, a data processing apparatus receives information about a service area for which fingerprint maps are to be generated. The data processing apparatus may receive an input of location information about the service area (i.e., locations of reference areas in the service area) and locations of APs arranged in the service area. It is assumed that there are n APs arranged in the service area.

First, building a fingerprint map for AP 1 will be described with a focus on creation. In step 420, the data processing apparatus may generate the above-described wireless signal feature vectors on the basis of the locations of reference points and the location of AP 1 in the service area. The wireless signal feature vectors consist of distances and angles obtained from respective reference points to AP 1. The wireless signal feature vectors are information used as conditions in cGAN.

In step 430, the data processing apparatus inputs random noise z into a generator network G. The generator network G is a network that has completed learning through the process shown in FIG. 3. In step 440, the generator network G generates a fingerprint map for AP 1. The left side of FIG. 4 shows an example of generating the fingerprint map for one AP.

In step 450, the data processing apparatus generates n fingerprint maps by iterating the same process for each of all APs in the service area.

In step 460, the data processing apparatus merges n fingerprint maps to generate a single fingerprint map including intensity vectors of a plurality of wireless signals.

Thereafter, the positioning apparatus may perform positioning of a location of a terminal by using the single fingerprint map generated for the service area.

The present researcher verified performance of the generative models for producing fingerprint maps.

The model and fingerprint map generation process, which are created by the present researcher, are briefly described.

The present researcher used TensorFlow 1.15.0. Both of the generator network G and discriminator network D created by the present researcher include one hidden layer having a ReLu activation function. In this case, the discriminator network D has a sigmoid activation function in an output layer.

The present researcher sampled 100 variables uniformly distributed in U [-1, 1]and used the variables as input noise. The present researcher created generative models by using four real area datasets. The four actual areas are shown in Table 1 below.

[Table 1]

| Location | Number of APs | Area size (number of reference points) | Area description |
|---|---|---|---|
| Hall | 9 | $8.1 \times 8.7$ m$^2$ (831) | - No obstacles |
| Lounge | 12 | $6.6 \times 9.9$ m$^2$ (764) | - Few obstacles |
| Office space 1 (Ofc0Obs) | 16 | $9.9 \times 9.9$ m$^2$ (1067) | - Medium level obstacle<br>- Six office spaces<br>- Opened doors |
| Office space 2 (Ofc-HighObs) | 10 | $6.3 \times 10.8$ m$^2$ (756) | - Many obstacles<br>- Six conference rooms with glass walls<br>- Half-opened doors |

The present researcher evaluated the followings: (a) a deviation of distance (in meter) between a location estimated by using the generated fingerprint map and an actual location; and (b) precision of the location estimated by using the generated fingerprint map. The precision is determined on the basis of actual measured values and a tolerance of 1.5 m range.

The present researcher evaluated the performance of the generative models for estimating fingerprints of unexplored places. The present researcher created the generative model in the four areas (i.e., the environments) and used the generative models to estimate the fingerprints of the unexplored places in the corresponding areas. The present researcher deleted values of random places from a real fingerprint map for each of the four environments and then estimated the fingerprints of the deleted places by using the generative models. Table 2 below shows the results of estimating the fingerprints of the unexplored places. Table 2 shows average values of the estimation results. Fingerprint estimation of the unexplored places may be referred as fingerprint map augmentation.

[Table 2]

| Train & Test | Accuracy (m) / Preesion (%) | | |
|---|---|---|---|
| | Unaug. | GAN-Loc | |
| | | CGAN | AC-GAN |
| Hall | 2.82 / 32.3 | 2.05 / 49.2 | 2.05 / 49.2 |
| Lounge | 2.36 / 40.3 | 1.69 1 53.8 | 1.72 / 52.5 |
| Ofc-Obs | 2.40 / 37.2 | 1.65 / 53.9 | 1.86 / 48.5 |
| Ofc-HighObs | 2.02 / 44.1 | 1.33 / 66.3 | 1.36 / 65.3 |

In Table 2, "Unaug." refers to positioning results obtained by using the fingerprint maps in which the fingerprints of unexplored places are not augmented. As described above, the present researcher created two generative models.

In Table 2, cGAN is a general conditional GAN, and AC-GAN is a GAN with added class loss. In a case where positioning is performed by augmenting the fingerprint maps, the performance (i.e., the deviation of distance) improves up to 0.77 m. Referring to Table 2, the generative models show higher performance in a case where the service area is complex and has many obstacles.

The present researcher evaluated the performance of the generative models for estimating fingerprint maps for an area where arrangement of APs has changed. The present researcher created the respective generative models in the four areas (the environments), changed the arrangement of the APs in the corresponding areas, and then created the fingerprint maps by using the generative models. Table 3 below shows the results of evaluating the performance of the fingerprint maps in the areas where the AP placement has changed.

[Table 3]

| Train & Test | Accuracy (m) / Precision (%) | | |
|---|---|---|---|
| | Upper | GAN-Loc | |
| | | CGAN | AC-GAN |
| Hall | 1.78/51.9 | 1.81 / 57.0 | 1.92 / 52.2 |
| Lounge | 1.56 / 55.3 | 1.76 / 56.1 | 1.78/ 50.5 |
| Ofc-Obs | 1.48 / 58.0 | 1.56 / 55.3 | 1.80 / 44.4 |
| Ofc-HighObs | 1.18 / 73.9 | 1.66 / 55.4 | 1.91 / 49.7 |

In Table 3, "Upper" refers to performance in a case where actual fingerprint maps are used. Even in a complex environment Ofc-HighObs with many obstacles, the generative models shows significant performance in positioning services.

The present researcher evaluated performance of generative models for estimating fingerprint maps in completely new areas. The present researcher created respective generative models in four areas (i.e., environments) and used the corresponding generative models to generate fingerprint maps for different areas. Table 4 below shows the results of evaluating the performance of the fingerprint maps generated in the new environments.

[Table 4]

| Test / Train | Accuracy (m) / Precision (%) | | | | | | | |
|---|---|---|---|---|---|---|---|---|
| | Hall | | Lounge | | Ofc-Obs | | Ofc-HighObs | |
| | CGAN | AC-GAN | CGAN | AC-GAN | CGAN | AC-GAN | CGAN | AC-GAN |
| Upper | 1.78 / 51.9 | | 1.56 / 55.3 | | 1.48 / 58.0 | | 1.18 / 74.9 | |
| Hall | --- | | 1.79 / 51.5 | 1.74 / 53.8 | 1.76 / 52.9 | 1.65 / 52.6 | 1.58 / 60.5 | 1.44 / 62.0 |
| Lounge | 1.97 / 54.2 | 1.87 / 55.5 | — | | 1.72 / 55.1 | 1.68 / 55.1 | 1.61 / 55.9 | 1.53 / 58.7 |
| Ofc-Obs | 1.83 / 57.1 | 1.88 / 50.2 | 1.61 / 55.9 | 1.89 / 42.9 | — | | 1.37 / 63.4 | 1.37 / 66.3 |
| Ofc-HighObs | 2.03 / 47.2 | 1.94 / 51.0 | 2.04 / 39.8 | 1.97 / 43.4 | 2.04 / 35.2 | 1.62 / 53.3 | — | |
| All Other Places | 1.86 / 50.0 | 2.01 / 50.2 | 1.79 / 48.6 | 1.74 / 53.5 | 1.61 / 52.9 | 1.63 / 52.7 | 1.51 / 58.4 | 1.36 / 65.6 |

In Table 4, "Upper" refers to performance in a case where actual fingerprint maps are used. Referring to Tables 3 and 4, generating new fingerprint maps by using the generative models created in the same environment (in view of structures and presence of obstacles) show somewhat higher performance. However, even in the case of generating the fingerprint maps for the completely new environments by using the generative models (in Table 4), significant results are shown in terms of positioning services.

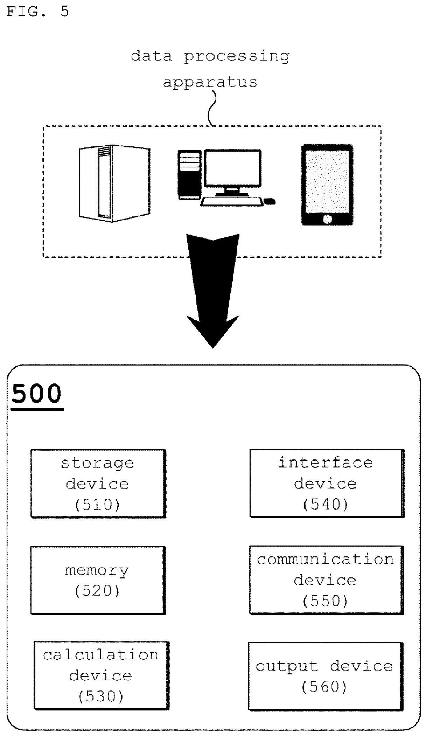

FIG. 5 illustrates an example of the data processing apparatus 500 for generating a fingerprint map for an unexplored area. The data processing apparatus 500 is a device for generating a fingerprint map for a new service area by using the above-described generative models. The data processing apparatus 500 may be physically implemented in various forms. For example, the data processing apparatus 500 may have the form of a computer device such as a PC, a smart device, a network server, or a chipset dedicated to data processing.

The data processing apparatus 500 may include a storage device 510, a memory 520, a calculation device 530, an interface device 540, a communication device 550, and an output device 560.

The storage device 510 stores the above-described generative models. Each generative model is a model that has completed learning with training data through the above-described process.

The storage device 510 may store information about new service areas. The information about the service areas may include locations of the corresponding areas, locations of reference points, locations of APs, etc.

The storage device 510 may store a program for controlling the process where fingerprint maps are generated by using the generative models.

The storage device 510 may store the generated fingerprint maps.

The memory 520 may store data, information, and the like, generated during the process of generating fingerprint maps by the data processing apparatus 500.

The interface device 540 is a device for receiving predetermined commands and data from the outside.

The interface device 540 may receive an input of generative models from a physically connected input device or an external storage device. The interface device 540 may receive an input of information about a service area from the physically connected input device or external storage device.

The interface device 540 may also transmit the generated fingerprint maps to an external object.

In a sense, the interface device 540 includes a component for transmitting data or information received by the communication device 550 into the data processing apparatus 500.

The communication device 550 refers to a component for receiving and transmitting predetermined information through a wired or wireless network.

The communication device 550 may receive generative models from an external object.

The communication device 550 may receive information about a service area from the external object.

The communication device 550 may also transmit the generated fingerprint maps to the external object such as a positioning apparatus.

The output device 560 is a device for outputting predetermined information. The output device 560 may output interfaces, fingerprint maps, etc. required for data processing process.

The calculation device 530 uses information on a service area to calculate distances and angles between reference points and an AP, which are in the service area. The calculation device 530 generates feature vectors described above. The calculation device 530 generates a feature vector (di, ai) for a reference point i. The calculation device 530 generates a feature vector set for n reference points located throughout the service area. The calculation unit 530 calculates the feature vector set for each AP.

The calculation device 530 generates a fingerprint map for each AP arranged in a service area. The calculation device 530 generates the fingerprint map by inputting feature vectors, which are extracted by using random noise and conditions, into a generative model. The calculation device 530 generates the fingerprint map for each AP. The calculation device 530 combines the fingerprint maps of all APs to generate a final fingerprint map having strength information for a plurality of wireless signals. This process is the same as described in FIG. 4.

The calculation device 530 may be an arithmetic device such as a processor, an AP, or a chip with embedded programs, the device being configured to process data and perform predetermined calculation.

In some cases, the data processing apparatus 500 may also be a positioning apparatus. In this case, by using a generated fingerprint map, the data processing apparatus 500 may perform positioning on the basis of wireless signal information received from a service area.

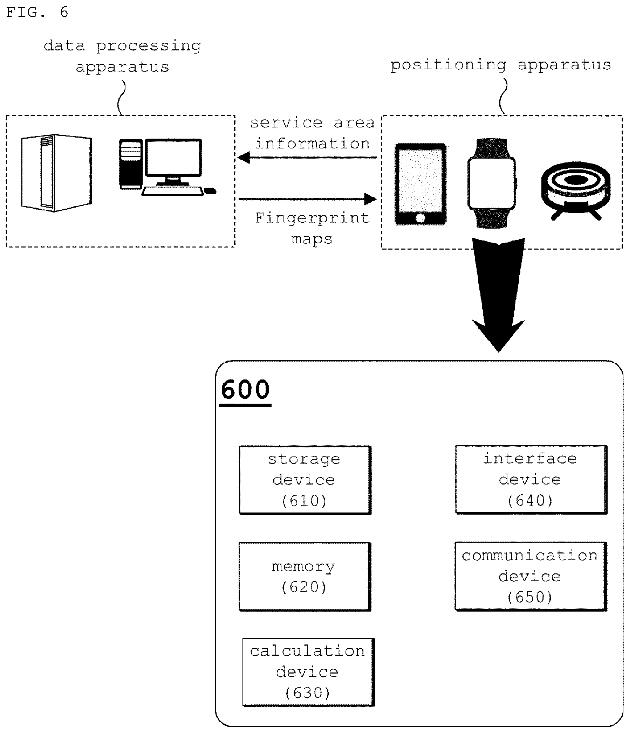

FIG. 6 illustrates an example of a positioning apparatus 600 using virtual fingerprint maps.

The positioning apparatus 600 may collect information about a service area where the positioning apparatus itself is located. The positioning apparatus 600 may transmit the service area information to the data processing apparatus. The positioning apparatus 600 may receive fingerprint maps, which are for the service area and generated by the data processing apparatus using a generative model. Each fingerprint map generated by the data processing apparatus is not a map generated by way of collecting actual wireless signal strength, so each fingerprint map may be called a virtual fingerprint map. In the following description, it is assumed that the positioning apparatus 600 is in a state of retaining each virtual fingerprint map for the currently located service area.

The positioning apparatus 600 may be any one of various types of devices. For example, the positioning apparatus 600 may be one of various types of devices such as smart devices, wearable devices, robots, and vacuum cleaners.

The positioning apparatus 600 may include a storage device 610, a memory 620, a calculation device 630, an interface device 640, and a communication device.

The storage device 610 stores the virtual fingerprint maps described above.

The storage device 610 may store a program for estimating a current location by using a fingerprint map. For example, the corresponding program may be a program for estimating the location on the basis of a nearest neighbor (NN) algorithm.

The memory 620 may store data, information, and the like, generated in a process where the positioning apparatus 600 performs positioning by using a fingerprint map.

The interface device 640 is a device for receiving an input of predetermined commands and data from the outside

The interface device 640 may receive an input of virtual fingerprint maps from a physically connected input device or an external storage device.

In a sense, the interface device 640 includes a component for transmitting data or information, received by the communication device 650, into the positioning apparatus 600.

The communication device 650 refers to a component for receiving and transmitting predetermined information through a wired or wireless network.

The communication device 650 may receive a fingerprint map from an external object.

The communication device 650 may receive wireless signals transmitted by APs in a service area.

The calculation device 630 may determine the strength of wireless signals, which are transmitted by APs, at a current location.

The calculation device 630 may estimate the current location by comparing wireless signal strength of each virtual fingerprint map and that of the current location. The wireless signal strength may include strength information for each of a plurality of wireless signals.

The calculation device 630 may be an arithmetic device such as a processor, an AP, or a chip with embedded programs, the device being configured to process data and perform predetermined calculation.

In addition, the generative model creation method, the generative model-based fingerprint map generation method, or the positioning method, which are as described above, may be implemented as programs (or applications) including algorithms executable on a computer. The above-described program may be stored and provided in a transitory or non-transitory computer readable medium.

The non-transitory computer readable medium is not a medium such as a register, a cache, a memory, and the like for storing short-term data, but a medium for storing data semi-permanently and readable by a device. Specifically, the various applications or programs described above may be stored and provided in the non-transitory computer readable medium such as a CD, a DVD, a hard disk, a Blu-ray disk, a USB, a memory card, a read-only memory (ROM), a programmable read only memory (PROM), an Erasable PROM (EPROM) or an Electrically EPROM (EEPROM), or a flash memory.

The transitory computer readable medium refers to various random access memories (RAMs) such as a static RAM (SRAM), a dynamic RAM (DRAM), a synchronous DRAM (SDRAM), a double data rate SDRAM (DDR SDRAM), an enhanced SDRAM (ESDRAM), a Synclink DRAM (SLDRAM)), and a direct Rambus RAM (DRRAM).

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

**Claims**

1. A method for generating a fingerprint map for an unexplored area, the method comprising:

   receiving, by a data processing apparatus, locations of reference points and locations of a plurality of access points (APs) for a service area;
   extracting, by the data processing apparatus, feature vectors for each AP on a basis of the locations of the reference points and the locations of the APs;
   generating, by the data processing apparatus, a fingerprint map for each of the APs by inputting, as conditions, the feature vectors extracted for each corresponding AP into a previously trained generative model for each of the APs and inputting random noise; and
   generating, by the data processing apparatus, a final fingerprint map for the service area by combining the fingerprint maps generated for the APs.

2. The method of claim 1, wherein the generative model is a conditional generative adversarial networks (cGAN) or auxiliary classifier GAN (AC-GAN).

3. The method of claim 1, wherein each feature vector for any one of the APs comprises:

a distance between one reference point and the any one of the APs at each of the reference points; and
an angle formed between the one reference point and the any one of the APs.

4. A data processing apparatus for generating a fingerprint map for an unexplored area, the data processing apparatus comprising:

an input device for receiving an input of locations of reference points and a location of each access point (AP) for a service area;
a storage device for storing a generative model trained to receive, as conditions, an input of feature vectors extracted on a basis of fingerprint maps of a specific area and each AP of the reference points of the specific area and generate the fingerprint maps for the specific area; and
a calculation device for extracting distances from the respective reference points for the service area to each AP and angles formed between the respective reference points and each AP to input the distances and angles as the conditions for the generative model, and inputting random noise into the generative model to generate the fingerprint maps for the service area.

5. The data processing apparatus of claim 4, wherein the feature vectors comprise:

the distances between one reference point and each AP in the specific area for each of the reference points in the specific area; and
the angles formed between the one reference point and each AP in the specific area.

6. The data processing apparatus of claim 4, wherein the generative model is a conditional generative adversarial networks (cGAN) or auxiliary classifier GAN (AC-GAN).

7. A positioning apparatus using virtual fingerprint maps, the positioning apparatus comprising:

a communication device for receiving wireless signals from access points (APs) at a current location;
a storage device for storing the virtual fingerprint maps; and
a calculation device for estimating the current location on a basis of wireless signal strength of each AP with reference to the virtual fingerprint maps,
wherein the virtual fingerprint maps are maps generated by a generative model trained to receive, as conditions, an input of feature vectors extracted on a basis of fingerprint maps of a specific area and each AP of reference points of the specific area and generate the fingerprint maps for the specific area.

8. The positioning apparatus of claim 7, wherein the feature vectors comprise:

distances between one reference point and each AP in the specific area for each of the reference points in the specific area; and
angles formed between the one reference point and each AP in the specific area.

FIG. 1

**100**

(A)

AP1  AP2  50

locations of AP

$(x_1, y_1)$  $(x_2, y_2)$

$(x_3, y_3)$

AP3

S

M

(B)

estimating location

110

S

(C)

80

RSSI

estimating location

location

120

S

FIG. 2

## 200

210

220

230

collecting
fingerprint
maps

extracting
wireless signal
feature vectors
from fingerprint
maps

training
generative
model

$$\begin{bmatrix} d_1, a_1 \\ d_2, a_2 \\ \vdots \\ d_n, a_n \end{bmatrix}$$

FIG. 3

Condition $c$

$$\begin{bmatrix} d_1, a_1 \\ d_2, a_2 \\ \vdots \\ d_n, a_n \end{bmatrix}$$

Real
Fingerprint X

320

310

$$\begin{bmatrix} z_1 \\ z_2 \\ \vdots \\ z_m \end{bmatrix}$$

Random Noise $z$

Generator
Network
$G$

Generated
Fingerprint
$G(z|c)$

Discriminator
Network
$D$

Sigmoid
Function
$S$

(Real)
1

0
(Fake)

300

FIG. 4

400

FIG. 5

data processing
apparatus

**500**

storage
device
(510)

interface
device
(540)

memory
(520)

communication
device
(550)

calculation
device
(530)

output device
(560)

FIG. 6

data processing
apparatus

positioning apparatus

service area
information

Fingerprint
maps

## 600

storage
device
(610)

interface
device
(640)

memory
(620)

communication
device
(650)

calculation
device
(630)

Europäisches
Patentamt

European
Patent Office

Office européen
des brevets

# EUROPEAN SEARCH REPORT

**Application Number**

EP 23 20 6242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ANVAR NARZULLAEV ET AL: "A fast and accurate calibration algorithm for real-time locating systems based on the received signal strength indication", AEU - INTERNATIONAL JOURNAL OF ELECTRONICS AND COMMUNICATIONS, ELSEVIER, AMSTERDAM, NL, vol. 65, no. 4, 25 March 2010 (2010-03-25) , pages 305-311, XP028155552, ISSN: 1434-8411, DOI: 10.1016/J.AEUE.2010.03.012 [retrieved on 2010-05-20] * the whole document * ----- | 1-8 | INV. G01S5/02 |
| Y | US 2010/265093 A1 (CHO SEONG YUN [KR] ET AL) 21 October 2010 (2010-10-21) * paragraph [0008] - paragraph [0037] * * paragraph [0051] - paragraph [0059] * * figures 1-5 * * abstract * ----- | 1,2,6 | |
| Y | US 2022/077944 A1 (ZOU HAN [US] ET AL) 10 March 2022 (2022-03-10) * paragraph [0009] - paragraph [0010] * * paragraph [0016] - paragraph [0039] * * figures 1-4 * * abstract * ----- | 1-8 | TECHNICAL FIELDS SEARCHED (IPC) G01S |

The present search report has been drawn up for all claims

| Place of search | Date of completion of the search | Examiner |
|---|---|---|
| Munich | 5 April 2024 | Galmiche, Aurélien |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

**EP 23 20 6242**

This annex lists the patent family members relating to the patent documents cited in the above-mentioned European search report.
The members are as contained in the European Patent Office EDP file on
The European Patent Office is in no way liable for these particulars which are merely given for the purpose of information.

**05-04-2024**

| Patent document cited in search report | Publication date | Patent family member(s) | Publication date |
|---|---|---|---|
| US 2010265093 A1 | 21-10-2010 | KR 20090059920 A | 11-06-2009 |
| | | US 2010265093 A1 | 21-10-2010 |
| | | WO 2009072735 A1 | 11-06-2009 |
| US 2022077944 A1 | 10-03-2022 | US 2022077944 A1 | 10-03-2022 |
| | | WO 2020124091 A1 | 18-06-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230056839